# FASCICULE DE BREVET EUROPEEN

(11) **EP 3 077 067 B1**
(45) Date de publication et mention de la délivrance du brevet: **11.04.2018**
(21) Numéro de dépôt: 14805631.0
(22) Date de dépôt: 02.12.2014
(51) Int. Cl.: A63B 69/00, F16G 11/10, A63B 43/00

(54) **POIGNÉE POUR UN DISPOSITIF D'ENTRAINEMENT COGNITIF ET DISPOSITIF D'ENTRAINEMENT COGNITIF LA COMPRENANT**
GRIFF FÜR EINE VORRICHTUNG FÜR KOGNITIVES TRAINING UND VORRICHTUNG FÜR KOGNITIVES TRAINING DAMIT
HANDLE FOR A COGNITIVE TRAINING DEVICE AND COGNITIVE TRAINING DEVICE COMPRISING SAME

(30) Priorité: 03.12.2013 LU 92322
(43) Date de publication de la demande: 12.10.2016
(73) Titulaire: SENSEBALL HOLDING S.A., 1350 Noduwez (BE)
(72) Inventeur: DUPONT, Jean-Louis, 4053 Chaudfontaine (BE)
(74) Mandataire: Gevers Patents
(86) Numéro de dépôt international: PCT/EP2014/076296
(87) Numéro de publication internationale: WO 2015/082492

(56) Documents cités:
- EP-A1- 0 821 983
- EP-A2- 0 260 981
- US-A- 4 391 226
- US-A- 5 083 797
- US-A1- 2009 075 763
- US-A1- 2010 075 784

## Description

La présente invention se rapporte à une poignée d'entrainement cognitif agencée pour être reliée par un moyen de liaison longitudinal à un moyen de connexion sur une balle, ladite poignée comprenant en outre un moyen d'ajustement de la longueur dudit moyen de liaison longitudinal.

Une telle poignée fait partie d'un dispositif d'entrainement cognitif, comprenant le moyen de liaison, qui est généralement une corde reliant une balle à ladite poignée. Ce dispositif est principalement utilisé dans le domaine du sport, en particulier du football, mais peut aussi être utilisé à des fins de rééducation ou en support de méthodes d'éducations psychomotrices. L'utilisateur pouvant tant être un footballeur professionnel qui souhaite corriger et éduquer sa touche de balle qu'une personne présentant des déficiences psychomotrices à traiter, ou encore une personne souhaitant améliorer son organisation corporelle. Une telle poignée est connue des documents US2009/075763 et EP0821983.

Prenant l'exemple d'une méthode d'entrainement footballistique, un utilisateur, c'est-à-dire un joueur de football, saisit par une de ses mains ladite poignée et veillera à frapper la balle avec un de ses pieds de manière à améliorer ainsi, selon un programme spécifique d'entrainement, sa touche de balle dans différentes situations d'entrainement.

Pour chaque utilisateur, la longueur de la corde doit être ajustée de manière à ce que, lorsque le bas de la balle est situé à 3 ou 4 centimètres du sol, la poignée se situe à la hauteur de la tête du fémur (au niveau de la hanche) de l'utilisateur.

Le touché répété à l'aide du dispositif d'entrainement permet au joueur d'assimiler de manière spécifique au niveau neuronal des mouvements des pieds et du reste du corps auxquels sont associés une situation de jeu particulière requérant un touché de balle spécifique, de sorte que, pour chaque situation de jeu, le joueur puisse de manière instinctive (par réflexe, c'est-à-dire qui requière un temps d'analyse de la phase de jeu qui doit être le plus court possible) placer son corps dans une position appropriée afin d'apporter la meilleure solution de jeu.

Malheureusement, les poignées existantes à ce jour ne permettent pas une adaptation aisée et précise de la longueur de la corde. En outre, lorsque le mouvement de la balle présente la moindre fluctuation de trajectoire, le moindre choc sur la corde est fortement amplifié jusqu'à la poignée et la balle devient alors difficile à contrôler, l'utilisateur perdant alors tout le bénéfice du dispositif d'entrainement. Il doit alors contrôler le mouvement aléatoire et recommencer le programme spécifique d'entrainement.

La poignée selon la présente invention est caractérisée en ce que ledit moyen d'ajustement comprend au moins deux parois latérales, reliées l'une à l'autre par une zone de jonction, et au moins ponctuellement espacées l'une de l'autre d'une première dimension au moins inférieure à un diamètre dudit moyen de liaison longitudinal pour définir une région de retenue et de manière à retenir ledit moyen de liaison lorsque celui-ci est introduit entre les deux parois latérales dudit moyen d'ajustement.

De cette façon, une première partie dudit moyen de liaison est coincée de manière ajustée par ledit moyen d'ajustement tandis qu'une deuxième partie libre du moyen de liaison est reliée par une première extrémité liée audit moyen de connexion de la balle. Ainsi, le moyen de liaison présente une première partie liée à la poignée par l'intermédiaire du moyen d'ajustement de façon à ce qu'elle ne puisse pas se détacher de ce dernier lors de l'utilisation du dispositif d'entrainement.

Dans un mode de réalisation particulier, la poignée selon l'invention est caractérisée en ce qu'elle comprend une pluralité de régions de retenue.

Eventuellement, les deux parois latérales sont reliées l'une à l'autre par ladite zone de jonction qui définit en outre une voie d'entrée vers ladite au moins une région de retenue pour ledit moyen de liaison.

Alternativement, les parois latérales sont au moins ponctuellement espacées l'une de l'autre d'une deuxième dimension au moins supérieure audit diamètre dudit moyen de liaison longitudinal pour définir une région de passage dudit moyen de liaison.

De cette façon, le joueur qui veut utiliser la poignée introduit le corde (c'est-à-dire le moyen de liaison) entre les deux parois latérales par la région de passage, par laquelle elle peut entrer librement, ajuste la longueur de la corde à une valeur souhaitée en fonction de l'exercice, pince ensuite la corde dans la région de retenue où les parois latérales sont espacées d'une distance inférieure au diamètre de la corde. Si l'utilisateur souhaite allonger ou réduire la longueur de la corde définie par la distance séparant la balle de la poignée, il doit alors simplement faire sortir la corde de la région de retenue pour la faire passer dans ladite région de passage.

La présence de la voie d'entrée sur la zone de jonction permet d'orienter le moyen de liaison vers la région de retenue du moyen d'ajustement et de faciliter le placement du moyen de liaison dans cette région.

De préférence, la poignée comprend par ailleurs un boîtier externe, défini en au moins deux parties de boîtier, ledit boîtier étant agencé pour loger au moins partiellement ledit moyen d'ajustement et, lorsque lesdites au moins deux parties de boîtier sont reliées les unes aux autres, présente un orifice de sortie du moyen de liaison.

La présence de l'orifice de sortie du boîtier permet d'orienter une troisième partie libre, opposée à la deuxième partie libre reliée à la balle, dudit moyen de liaison hors de la région de retenue du moyen d'ajustement. Cette troisième partie libre procure un moyen de préhension du moyen de liaison qu'un utilisateur pourra saisir pour déloger et loger à loisir ledit moyen de liaison dans et hors de la région de retenue du moyen d'ajustement lors de l'ajustement de la longueur dudit moyen de liaison.

De manière avantageuse, au moins une partie de boîtier forme une cavité ouverte d'une gorge, ladite cavité étant agencée pour accueillir de manière ajustée ledit moyen de liaison.

De cette façon, la troisième partie libre peut être momentanément logée dans la gorge de la poignée et permettre une préhension plus confortable de la poignée par un utilisateur.

Dans un mode particulièrement avantageux de la présente invention, la poignée comprend en outre un moyen de guidage agencé pour guider ledit moyen de liaison dans une direction de guidage, ledit moyen de guidage s'étendant dudit moyen d'ajustement d'un angle compris entre 90 degrés et 150 degrés, de préférence entre 110 degrés et 140 degrés. En particulier, le moyen de guidage peut comprendre une paroi de guidage, ou un tube, ou une gorge.

La présence du moyen de guidage permet de guider le moyen de liaison dans une direction de guidage vers ladite région de retenue dudit moyen d'ajustement de sorte que le déplacement du moyen de liaison dans ledit moyen d'ajustement soit facilitée, en particulier lorsque le poids de la balle est élevé, l'ajustement de la longueur à une longueur désirée étant effectué par le biais dudit moyen d'ajustement de la poignée.

D'autres formes de réalisation de la poignée suivant l'invention sont indiquées dans les revendications annexées.

La présente invention concerne aussi un dispositif d'entrainement cognitif comprenant :
- une poignée selon l'invention ;
- une balle comprenant un moyen de connexion ;
- un moyen de liaison agencé pour relier ou reliant la poignée audit moyen de connexion de ladite balle.

De préférence, ledit moyen de liaison est un câble, ou une chaîne, ou une corde.

En particulier, ledit moyen de connexion de la balle comprend :
- un orifice traversant une paroi de balle ;
- une première partie de connexion placée à l'intérieur de ladite balle ; et
- une deuxième partie de connexion placée à l'extérieur de ladite balle,
ladite première partie de connexion présentant une face frontale à partir de laquelle un premier élément de raccord mâle fait saillie, ledit premier élément de raccord mâle traversant ledit orifice et étant emboité dans un deuxième élément de raccord femelle procuré par la deuxième partie de connexion et agencé pour être relié audit moyen de liaison, ladite face frontale dudit premier élément de raccord étant en contact avec une partie de paroi interne de balle et une face dorsale dudit deuxième élément de raccord étant agencée pour être en contact avec une partie de paroi externe de balle, de façon à former une connexion hermétique entre ladite balle et ledit moyen de liaison.

D'autres formes de réalisation du dispositif suivant l'invention sont indiquées dans les revendications annexées.

D'autres caractéristiques, détails et avantages de l'invention ressortiront de la description donnée ci-après, à titre non-limitatif et en faisant référence aux dessins annexés.
La figure 1 est une vue éclatée en perspective d'un mode de réalisation préférentiel de la poignée selon l'invention.
Les figures 2a à 2c sont d'autres vues en perspectives du mode de réalisation préférentiel illustré à la figure 1.
La figure 2d est une vue en coupe longitudinale I-I de la poignée des figures 2a à 2c.
La figure 3 est une vue en perspective du dispositif selon l'invention.
Les figures 4a et 4b illustrent une première vue en perspective et une deuxième vue de profil du moyen de connexion de la balle.

Sur les figures, les éléments identiques ou analogues portent les mêmes références.

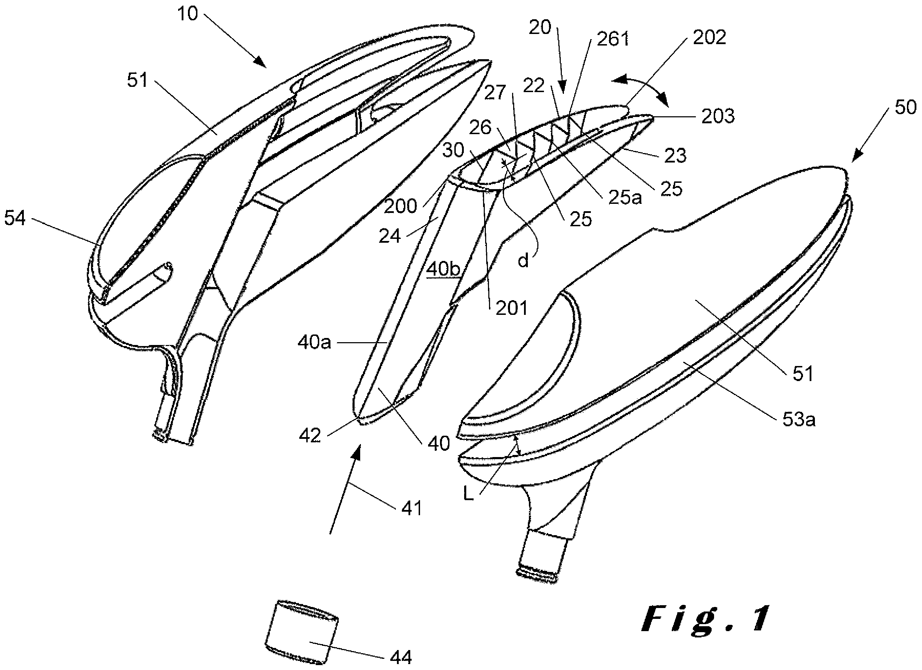

La figure 1 est une vue éclatée en perspective d'un mode de réalisation préférentiel de la poignée 10 selon l'invention comprenant un moyen d'ajustement 20 de la longueur d'un moyen de liaison longitudinal, ce dernier étant agencé pour relier une balle à la poignée 10.

Le moyen d'ajustement comprend deux parois latérales 22, 23, qui forment une pince 21, les parois étant reliées entre elles par une zone de jonction 24. En particulier, chaque paroi latérale comprend une première extrémité liée 200, 201 et une deuxième extrémité libre 202, 203, chaque extrémité liée de chaque paroi latérale 22 , 23 étant reliées entre-elles par ledit moyen de jonction 24, les extrémités liées 200, 201 définissant en outre une voie d'entrée 30 du moyen de liaison 60 vers une région de retenue 25 située entre lesdites parois latérales 22, 23 et dans laquelle le moyen de liaison est retenu dans le moyen d'ajustement 20. En outre, les extrémités libres du moyen d'ajustement définissent une voie de sortie 31 du moyen de liaison 60.

Les parois 22, 23 sont au moins ponctuellement espacées l'une de l'autre d'une distance ***d,*** le moyen de liaison 60 longitudinal présentant une section transversale caractérisée par un diamètre ou une largeur de section au moins égale à la distance ***d*** séparant chaque paroi, de manière à retenir le moyen de liaison lorsque celui-ci est introduit dans la région de retenue 25 définie par un espacement ponctuel d'une largeur ***d*** entre les deux parois latérales 22, 23 du moyen d'ajustement 20.

Dans le mode de réalisation de la poignée tel qu'illustré à la figure 1, au moins une paroi 22, 23 comprend une pluralité de régions de retenue. En particulier, chaque paroi latérale présente une surface interne agencée pour être en contact avec une surface externe dudit moyen de liaison lorsqu'il est retenu dans au moins une des régions de retenue 25.

De préférence, les surfaces internes de chaque paroi se font face. En particulier, au moins une surface interne comprend au moins une crête 26 et éventuellement au moins un creux 27. Dans le mode de réalisation de la figure 1, au moins une surface interne d'une paroi latérale comprend au moins une crête et éventuellement un creux, ou une pluralité de crêtes et de creux en alternance, le moyen d'ajustement 20 présentant alors une pluralité de régions de retenue 25 formée entre chaque extrémité de crête 261 d'une première paroi latérale 22 et la surface interne d'une deuxième paroi latérale opposée 23 à la première paroi latérale, et au moins une région de passage formée entre chaque creux 27 d'une première paroi latérale 22 et la surface interne ou un creux d'une deuxième paroi latérale opposée 23 à la première paroi latérale séparés d'une distance ***d'*** au moins supérieure à au diamètre du moyen de liaison 60. Dans ce mode particulier, le moyen d'ajustement comprend alors une succession de régions de retenue et de régions de passage 25a en alternance définies entre les parois latérales 22, 23.

En outre, chaque région de retenue peut aussi être formée entre deux crêtes de chaque paroi, ou entre une crête d'une paroi et un creux d'une autre paroi, qui lui est opposé.

En particulier, chaque paroi latérale est agencée pour se déplacer entre une première position de retenue correspondant à un premier état dans lequel, lorsque le moyen de liaison 60 est logé dans au moins une région de retenue, chaque surface interne de chaque paroi latérale est serrée sur la surface externe du moyen de liaison 60, et une deuxième position libre correspondant à un deuxième état dans lequel ledit moyen de liaison est libre de mouvoir entre les parois latérales, par exemple dans une région de passage 25a.

Lorsqu'une première partie dudit moyen de liaison est coincée de manière ajustée dans la région de retenue 25 dudit moyen d'ajustement 20, une deuxième partie libre du moyen de liaison est reliée par une première extrémité liée audit moyen de connexion de la balle. Ainsi, le moyen de liaison présente une première partie retenue de manière suffisamment serrée au moyen d'ajustement pour qu'elle ne puisse pas se détacher de ce dernier lors de l'utilisation du dispositif d'entrainement et de la mise en mouvement conjointement de la balle et de la deuxième partie libre du moyen de liaison reliant la balle à la poignée.

La zone de jonction 24 des extrémités liées de chaque paroi 22, 23 du moyen d'ajustement est agencée pour générer une force élastique agissant sur chaque paroi de façon à générer sur la surface interne de chaque paroi une force de pression dirigée de chaque paroi latérale vers la région de retenue et agencée pour serrer la surface interne des parois sur la surface externe du moyen de liaison dans la région de retenue 25.

Dans ce contexte, la zone de jonction présente un rayon de courbure tel qu'il permet de générer une force élastique d'intensité suffisante pour assurer la retenue du moyen de liaison dans la région de retenue du moyen d'ajustement.

De préférence, la zone de jonction et les parois latérales du moyen d'ajustement sont réalisés dans un matériau plastique.

De cette façon, la surface interne de chaque paroi, dans une région de retenue, exerce une première force de pression agissant sur la surface externe du moyen de liaison, chaque paroi latérale subit, en réaction à la force de pression appliquée sur le moyen de liaison, une deuxième force de réaction de même direction mais de sens opposé, exercée par le moyen de liaison.

Dans ce contexte, le maintien du moyen de liaison dans la région de retenue est assuré par l'équilibre des forces de pression et de réaction générée entre le moyen de liaison et chaque surface interne de chaque paroi latérale.

Eventuellement, le moyen d'ajustement 20 est un assemblage d'au moins deux parties indépendantes agencées pour être reliées entre-elles, de préférence de manière amovible. Par exemple, une première partie indépendante du moyen d'ajustement peut être la première paroi latérale, tandis qu'une deuxième partie indépendante du moyen d'ajustement peut être la deuxième paroi latérale, chaque paroi latérale étant agencée pour être reliée l'une à l'autre par un moyen de jonction définissant la zone de jonction 24 qui procure une troisième partie du moyen d'ajustement.

Comme illustré à la figure 1, la poignée comprend en outre un moyen de guidage 40 agencé pour guider le moyen de liaison 60 dans une direction de guidage 41, le moyen de guidage s'étendant à partir du moyen d'ajustement d'un angle ***α*** compris entre 90 degrés et 150 degrés, de préférence entre 110 degrés et 140 degrés.

En particulier, le moyen de guidage 40 est un tube dans lequel le moyen de liaison est agencé à être introduit de sorte qu'au moins une partie d'une surface interne du tube soit agencée à être contact avec la surface externe du moyen de liaison lorsque le moyen de liaison se déplace le long de la direction de guidage 41.

Le tube présente un premier orifice d'entrée 42 du moyen de liaison et un deuxième orifice de sortie 43 du moyen de liaison, le deuxième orifice de sortie coïncidant de préférence avec la voie d'entrée 30 du moyen de liaison 60 qui donne accès à la région de retenue 25 située entre lesdites parois latérales.

Ce tube est en outre orienté de sorte que la direction de guidage est un vecteur sécant à un plan horizontal médian aux parois latérales 22, 23, la direction formant avec le plan médian un angle *α* compris entre 90 degrés et 150 degrés, de préférence entre 110 degrés et 140 degrés, de sorte à améliorer l'ergonomie de la poignée.

De préférence, le moyen de guidage est un assemblage d'au moins deux parties de moyen de guidage agencées pour être reliées entre-elles, de préférence de manière amovible.

En particulier, comme le montre la figure 1, le tube 40 comprend une première partie de tube 40a et une deuxième partie de tube 40b, chacune des parties de tube étant reliée à une paroi latérale 22, 23. Les parties de tube, une fois reliée entre elles, par exemple par une ligne de jonction par soudure, forment le moyen de guidage qui est prolongé par la paire de parois latérales 22, 23 du moyen d'ajustement 20. De préférence, une bague 44 peut être emboitée sur le tube de façon à renforcer la ligne de jonction entre les parties du moyen de guidage 40a, 40b.

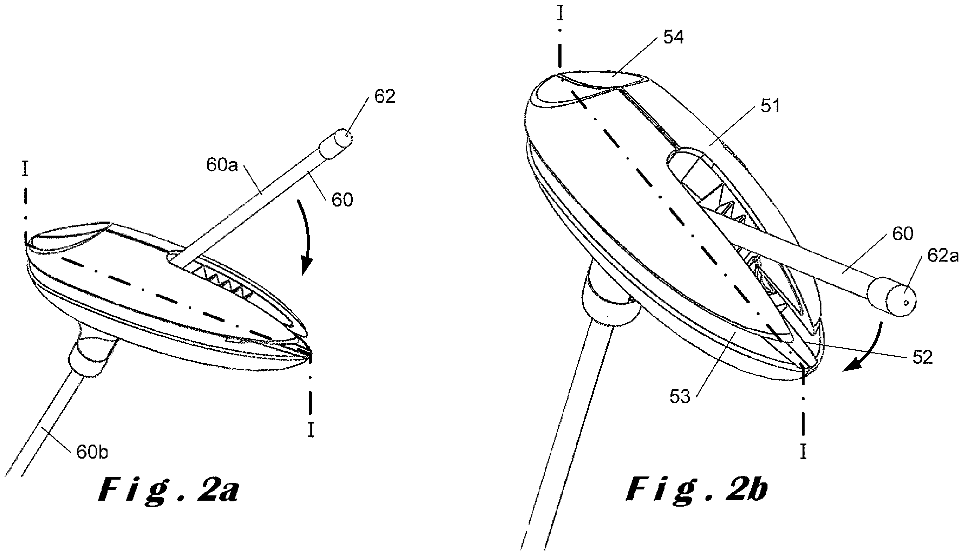

Comme l'illustre les figures 2a et 2b, la poignée comprend en outre un boîtier externe 50 dans lequel est logé au moins partiellement le moyen d'ajustement 20 et/ou ledit moyen de guidage 40, le boîtier présentant une enveloppe 51 traversée par un orifice de sortie 52 du moyen de liaison 60 placé de façon à coïncider avec la voie de sortie 31 du moyen de liaison 60, l'enveloppe 51 présentant une cavité ouverte d'une gorge périphérique 53 présentant une paroi interne 53a définissant la paroi de la cavité ouverte, la cavité étant agencée pour accueillir de manière ajustée le moyen de liaison 60 qui peut être par exemple une corde.

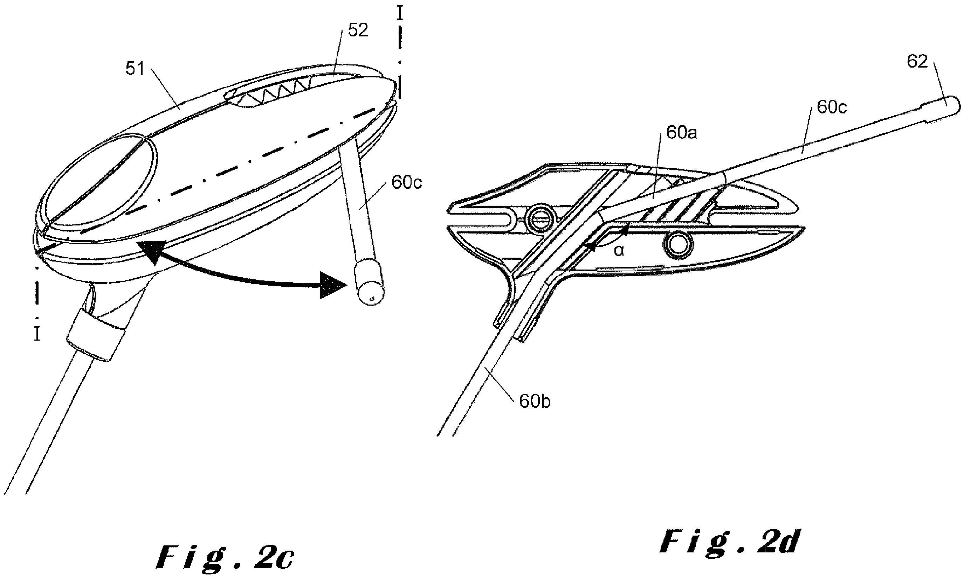

Alternativement, l'extrémité 62 du moyen de liaison 60 est reliée à un embout en un matériau souple (par exemple en caoutchouc) 62a, d'un diamètre au moins égal, de préférence supérieur, à la largeur L de la gorge 53. De cette façon, de par l'élasticité de l'embout, ce dernier pourra être logé de manière ajustée, par simple pression (figure 2c), dans la cavité ouverte de la gorge 53, et en être extrait par simple traction. Ainsi, le maintien ajusté du moyen de liaison 60 dans la cavité de gorge périphérique 53 est assuré puisqu'une force élastique est générée par le matériau de l'embout, en réaction à la pression appliquée sur ledit embout, et agit sur la paroi interne de la cavité de gorge 53, le maintien de l'embout et donc du moyen de liaison étant alors assuré par l'équilibre des forces de pression et de réaction.

Eventuellement, le boîtier comprend au moins deux parties de boîtier agencées pour être reliées entre-elles, de préférence de manière amovible, et lorsque lesdites au moins deux parties de boîtier sont reliées les unes aux autres, le boîtier présente un orifice de sortie 52 du moyen de liaison qui communique avec la voie de sortie 31 du moyen de liaison 60.

De préférence, le boitier comprend en outre un renfoncement 54 pour loger un pouce d'un utilisateur.

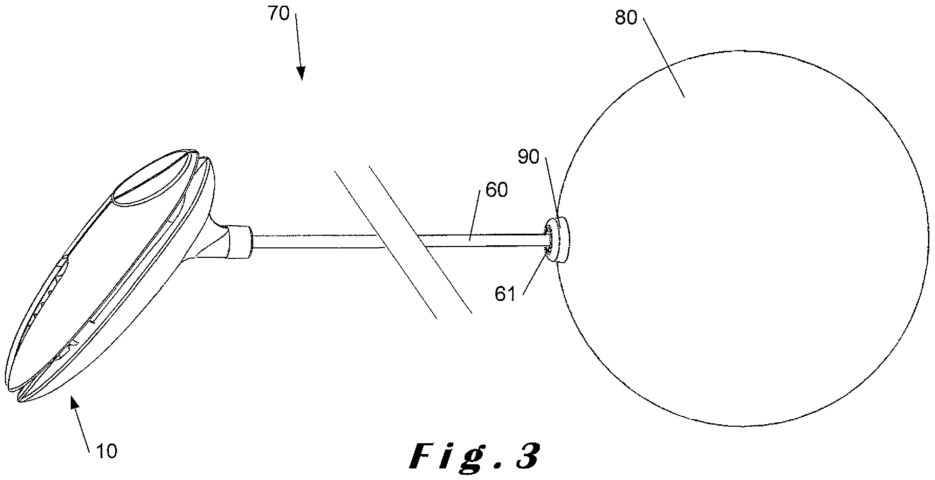

La figure 3 est une vue en perspective d'un mode de réalisation particulier du dispositif 70 selon l'invention comprenant :
- la poignée 10 ;
- une balle 80 comprenant un moyen de connexion 90 ;
- le moyen de liaison 60 agencé pour relier la poignée au moyen.de connexion 90 de la balle 80.

De préférence, le moyen de liaison relie la poignée au moyen de connexion de la balle.

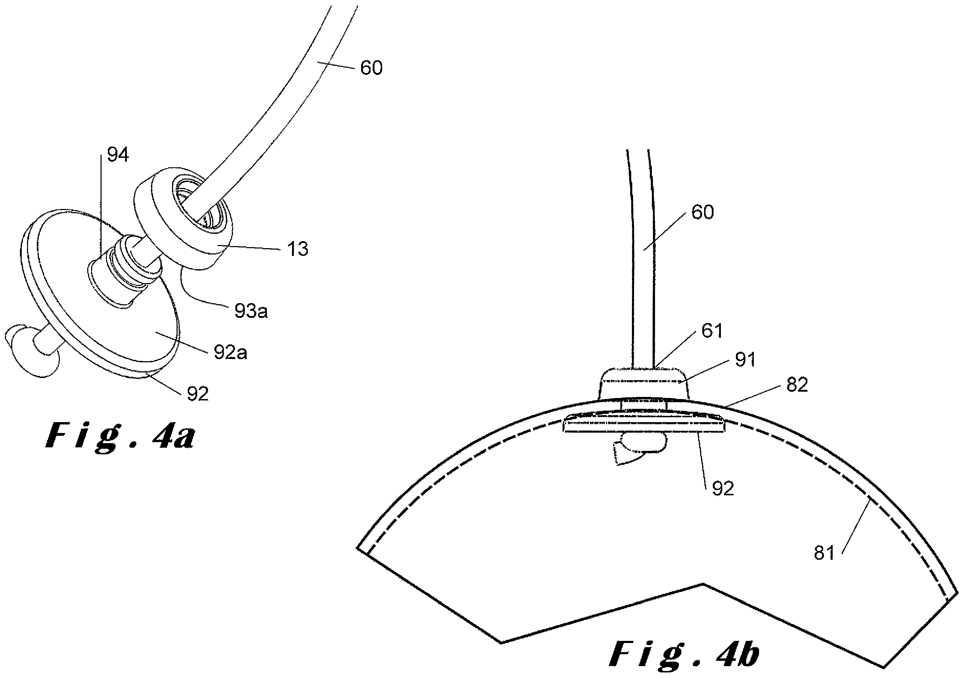

En particulier, le moyen de connexion 90 de la balle 80 comprend :
- un orifice 91 traversant une paroi de la balle 80 ;
- une première partie de connexion 92 placée à l'intérieur de la balle (figures 4a et 4b) ; et
- une deuxième partie de connexion 92 placée à l'extérieur de la balle.

La première partie de connexion 92 présente une face frontale 92a à partir de laquelle un premier élément de raccord mâle 94 fait saillie. Ce premier élément de raccord mâle 94 est agencé pour traverser l'orifice 91 de la paroi de balle 80. Il est en outre agencé pour s'emboiter dans un deuxième élément de raccord femelle 93 procuré par la deuxième partie de connexion et agencé pour être relié à la première extrémité liée 61 de corde 60, la face frontale 92a du premier moyen de connexion 92 étant agencée pour être en contact avec une partie de paroi interne 81 de balle et une face dorsale 93a du deuxième élément de raccord 93 étant agencée pour être en contact avec une partie de paroi externe 82 de balle, de façon à former une connexion hermétique entre la paroi de balle 80 et la corde.

Lors de l'utilisation du dispositif selon l'invention, telle qu'illustrée aux figures 2a à 2c, le fonctionnement de ce dernier suit les étapes suivantes :
- L'utilisateur saisit d'abord la poignée 10 avec une première main, de l'autre main, il saisit une partie de corde 60 ou une extrémité libre 62 de la corde ;
- La corde 60 est ensuite pénétrée par son extrémité libre 62 dans le tube 40 de guidage, traverse ce dernier et traverse ensuite la voie d'entrée 31 du moyen de guidage pour pénétrer dans la région de passage 25a du moyen d'ajustement. Dans cette configuration, la corde 60 présente une première partie 60a située dans la région de passage, par exemple entre deux creux 27 chacun situé sur chaque paroi latérale, et est agencée pour être logée dans au moins une région de retenue 25 du moyen d'ajustement 20, par exemple entre deux crêtes 26, et une deuxième partie libre 60b agencée pour relier la poignée 10 à la balle 80 ;
- L'utilisateur place ensuite la première partie 60a de corde 60 entre les deux parois latérales 22, 23 du moyen d'ajustement 20 en exerçant une force de poussée sur cette première partie de corde vers la région de retenue 25 (figures 2a et 2b), à travers la voie de sortie 31 du moyen d'ajustement 20 et l'orifice de sortie 52 du boîtier, de sorte que la première partie de corde 60a soit alors retenue de manière ajustée dans le moyen d'ajustement. En fonction de l'ajustement souhaité de la longueur de la deuxième partie 60b libre de corde, la corde présentera ou non une troisième partie libre 60c de corde, opposée à la deuxième partie 60b libre de corde (figure 2d). Dans ce contexte, la longueur de la troisième partie libre 60c de corde 60 dépend de la distance séparant la voie d'entrée 30 et la voie de sortie 31 du moyen d'ajustement 20, et de la longueur de la corde 60 ;
- L'utilisateur peut enfin momentanément loger l'éventuelle troisième partie libre de corde 60c de manière amovible dans la gorge de la poignée et rendre ainsi la préhension de cette dernière plus confortable (figure 2c). Il est à noter que cette troisième partie libre de corde 60c procure un moyen de préhension du moyen de liaison 60 que l'utilisateur peut alors saisir pour déloger et loger à loisir la corde 60 dans et hors de la région de retenue 25 du moyen d'ajustement 20 lors de l'ajustement de la longueur de la deuxième partie libre 60a de corde 60.

De manière répétée, l'utilisateur pourra, par simple traction, dans un sens opposé à celui de la force de poussée, sur le moyen de préhension ou sur l'extrémité libre 62 de la corde, déloger la première partie 60a de corde de la région de retenue 25 vers la région de passage voisine, et, en tirant ou en laissant la corde se mouvoir sous l'effet du poids de la balle, le long de la direction de guidage 41, régler à nouveau la longueur de la deuxième partie libre pour ensuite loger à nouveau la corde dans le moyen d'ajustement.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Poignée (10) d'entrainement cognitif agencée pour être reliée par un moyen de liaison (60) longitudinal à un moyen de connexion (90) sur une balle (80), ladite poignée (10) comprenant en outre un moyen d'ajustement (20) de la longueur dudit moyen de liaison (60) longitudinal, ladite poignée étant **caractérisée en ce que** ledit moyen d'ajustement (20) comprend au moins deux parois latérales (22, 23), reliées l'une à l'autre par une zone de jonction (24), et au moins ponctuellement espacées l'une de l'autre d'une première dimension d au moins inférieure à un diamètre dudit moyen de liaison longitudinal pour définir une région de retenue (25) et de manière à retenir ledit moyen de liaison (60) lorsque celui-ci est introduit entre les deux parois latérales (22, 23) dudit moyen d'ajustement (20).

2. Poignée (10) selon la revendication 1, **caractérisée en ce qu'**elle comprend une pluralité de régions de retenue (25).

3. Poignée (10) selon la revendication 1 ou 2, **caractérisée en ce que** les parois latérales (22, 23) sont en outre au moins ponctuellement espacées l'une de l'autre d'une deuxième dimension ***d'*** au moins supérieure audit diamètre dudit moyen de liaison longitudinal (60) pour définir une région de passage (25a) dudit moyen de liaison.

4. Poignée (10) selon l'une quelconque des revendications précédentes, **caractérisée en ce que** ladite zone de jonction (24) défini une voie d'entrée (30) vers ladite au moins une région de retenue (25) pour ledit moyen de liaison (60).

5. Poignée (10) selon l'une quelconque des revendications précédentes, **caractérisée en ce qu'**elle comprend en outre un moyen de guidage (40) agencé pour guider ledit moyen de liaison (60) dans une direction de guidage (41), ledit moyen de guidage (40) s'étendant dudit moyen d'ajustement (20) d'un angle ***α*** compris entre 90 degrés et 150 degrés.

6. Poignée (10) selon la revendication 5, **caractérisée en ce que** le moyen de guidage (40) comprend une paroi de guidage, ou un tube, ou une gorge.

7. Poignée (10) selon l'une quelconque des revendications précédentes, comprenant un boîtier externe (50), en au moins deux parties de boîtier, ledit boîtier étant agencé pour loger au moins partiellement ledit moyen d'ajustement (20) et, lorsque lesdites au moins deux parties de boîtier sont reliées les unes aux autres, présente un orifice de sortie (52) dudit moyen de liaison (60).

8. Poignée (10) selon la revendication 7, **caractérisée en ce qu'**au moins une partie de boîtier forme une cavité ouverte d'une gorge (53), ladite cavité (53) étant agencée pour accueillir de manière ajustée ledit moyen de liaison (60).

9. Dispositif (70) d'entrainement cognitif comprenant :
- une poignée (10) selon l'une quelconque des revendications précédentes ;
- une balle (80) comprenant un moyen de connexion (90) ;
- un moyen de liaison (60) agencé pour relier ou reliant la poignée (10) audit moyen de connexion (90) de ladite balle (80).

10. Dispositif (70) selon la revendication 9, **caractérisé en ce que** ledit moyen de connexion (90) de la balle (80) comprend :
- un orifice traversant une paroi de balle ;
- une première partie de connexion (92) placée à l'intérieur de ladite balle ; et
- une deuxième partie de connexion (93) placée à l'extérieur de ladite balle,
ladite première partie de connexion (92) présentant une face frontale (92a) à partir de laquelle un premier élément de raccord mâle (94) fait saillie, ledit premier élément de raccord mâle (94) traversant ledit orifice (91) et étant emboité dans un deuxième élément de raccord femelle (93) procuré par la deuxième partie de connexion (93) et agencé pour être relié audit moyen de liaison (60), ladite face frontale (92a) dudit premier élément de raccord étant en contact avec une partie de paroi interne (81) de balle et une face dorsale (93a) dudit deuxième élément de raccord (93) étant agencée pour être en contact avec une partie de paroi externe (82) de balle, de façon à former une connexion hermétique entre ladite balle (80) et ledit moyen de liaison (60).

11. Dispositif (70) selon la revendication 9 ou 10, **caractérisé en ce que** ledit moyen de liaison (60) est un câble, ou une chaîne, ou une corde.

## Patentansprüche

1. Griff (10) für kognitives Training, angeordnet, um über ein längliches Verbindungsmittel (60) mit einem Anschlussstück (90) auf einem Ball (80) verbunden zu werden, wobei der erwähnte Griff (10) ferner ein Anpassungsmittel (20) mit der Länge des erwähnten länglichen Verbindungsmittels (60) umfasst, wobei der erwähnte Griff **dadurch gekennzeichnet ist, dass** das erwähnte Anpassungsmittel (20) mindestens zwei Seitenwände (22, 23) umfasst, miteinander über einen Verbindungsbereich (24) verbunden, und voneinander zumindest punktuell im Abstand einer ersten Abmessung d getrennt angeordnet, zumindest geringer als ein Durchmesser des erwähnten länglichen Verbindungsmittels, um eine Haltezone (25) zu definieren und um das erwähnte Verbindungsmittel (60) zu halten, wenn dieses zwischen die zwei Seitenwände (22, 23) des erwähnten Anpassungsmittels (20) eingeführt wird.

2. Griff (10) nach Anspruch 1, **dadurch gekennzeichnet, dass** er eine Vielzahl von Haltezonen (25) umfasst.

3. Griff (10) nach Anspruch 1 oder 2, **dadurch gekennzeichnet, dass** die Seitenwände (22, 23) ferner voneinander zumindest punktuell im Abstand einer zweiten Abmessung ***d'*** getrennt angeordnet, größer als der erwähnte Durchmesser des erwähnten länglichen Verbindungsmittels (60), um eine Durchgangszone (25a) des erwähnten Verbindungsmittels zu definieren.

4. Griff (10) nach irgendeinem der vorigen Ansprüche, **dadurch gekennzeichnet, dass** der erwähnte Verbindungsbereich (24) einen Zugangsweg (30) zur erwähnten zumindest einen Haltezone (25) für das erwähnte Verbindungsmittel (60) definiert.

5. Griff (10) nach irgendeinem der vorigen Ansprüche, **dadurch gekennzeichnet, dass** er ferner ein Führungsmittel (40) umfasst, angeordnet, um das erwähnte Verbindungsmittel (60) in eine Führungsrichtung (41) zu führen, wobei sich das erwähnte Führungsmittel (40) vom erwähnten Anpassungsmittel (20) in einem Winkel von zwischen 90 Grad und 150 Grad erstreckt.

6. Griff (10) nach Anspruch 5, **dadurch gekennzeichnet, dass** das Führungsmittel (40) eine Führungswand umfasst, oder ein Rohr, oder eine Rille.

7. Griff (10) nach irgendeinem der vorigen Ansprüche, welcher ein äußeres Gehäuse (50), aus mindestens zwei Gehäuseteilen, umfasst, wobei das erwähnte Gehäuse angeordnet ist, um das erwähnte Anpassungsmittel (20) zumindest teilweise aufzunehmen und, wenn die erwähnten mindestens zwei Gehäuseteile miteinander verbunden sind, eine Ausgangsöffnung (52) des erwähnten Verbindungsmittels (60) aufweist.

8. Griff (10) nach Anspruch 7, **dadurch gekennzeichnet, dass** zumindest ein Gehäuseteil einen offenen Hohlraum einer Rille (53) formt, wobei der erwähnte Hohlraum (53) angeordnet ist, um das erwähnte Verbindungsmittel (60) angepasst aufzunehmen.

9. Vorrichtung (70) für kognitives Training, welche Folgendes umfasst:
- einen Griff (10) nach irgendeinem der vorigen Ansprüche;
- einen Ball (80), welcher ein Anschlussstück (90) umfasst;
- ein Verbindungsmittel (60), angeordnet, um den Griff (10) mit dem erwähnten Anschlussstück (90) des erwähnten Balles (80) zu verbinden, oder diesen verbindend.

10. Vorrichtung (70) nach Anspruch 9, **dadurch gekennzeichnet, dass** das erwähnte Anschlussstück (90) des Balles (80) Folgendes umfasst:
- eine Öffnung, die die Wand des Balles durchquert;
- ein erstes Anschlussteil (92) im Inneren des erwähnten Balles; und
- ein zweites Anschlussteil (93) außen auf dem erwähnten Ball,
wobei das erste Anschlussteil (92) eine Vorderseite (92a) aufweist, von der aus ein erstes männliches Anschlusselement (94) herausragt, wobei das erste männliche Anschlusselement (94) die erwähnte Öffnung (91) durchquert und in ein zweites weibliches Anschlusselement (93) eingefügt wird, das durch das zweite Anschlussteil (93) bereitgestellt ist und angeordnet ist, um mit dem erwähnten Verbindungsmittel (60) verbunden zu werden, wobei die erwähnte Vorderseite (92a) des erwähnten ersten Anschlusselements in Kontakt mit einem Teil der Innenwand (81) des Balles ist und eine Rückseite (93a) des erwähnten zweiten Anschlusselements (93) angeordnet ist, um in Kontakt mit einem Teil der Außenwand (82) des Balles zu sein, sodass eine hermetische Verbindung zwischen dem erwähnten Ball (80) und dem erwähnten Verbindungsmittel (60) gebildet wird.

11. Vorrichtung (70) nach Anspruch 9 oder 10, **dadurch gekennzeichnet, dass** das erwähnte Verbindungsmittel (60) ein Kabel ist, oder eine Kette, oder ein Seil.

## Claims

1. A cognitive training handle (10) arranged to be connected by a longitudinal connecting means (60) to a connection means (90) on a ball (80), said handle (10) further comprising means (20) for adjusting the length of said longitudinal connecting means (60), said handle being **characterized in that** said adjusting means (20) comprises at least two side walls (22, 23), connected to one another by a junction zone (24), and at least periodically spaced apart from one another by a first dimension d at least smaller than a diameter of said longitudinal connecting means to define a retaining region (25) and so as to retain said connecting means (60) when the latter is introduced between the two side walls (22, 23) of said adjusting means (20).

2. The handle (10) according to claim 1, **characterized in that** it comprises a plurality of retaining regions (25).

3. The handle (10) according to claim 1 or 2, **characterized in that** the side walls (22, 23) are at least periodically spaced apart from one another by a second dimension d at least larger than said diameter of said longitudinal connecting means (60) to define a passage region (25a) for said connecting means.

4. The handle (10) according to any one of the preceding claims, **characterized in that** said junction zone (24) defines an entry path (30) toward said at least one retaining region (25) for said connecting means (60).

5. The handle (10) according to any one of the preceding claims, **characterized in that** it further comprises a guide means (40) arranged to guide said connecting means (60) in a guide direction (41), said guide means (40) extending from said adjusting means (20) by an angle ***α*** comprised between 90 degrees and 150 degrees.

6. The handle (10) according to claim 5, **characterized in that** the guide means (40) can comprise a guide wall, or a tube, or a groove.

7. The handle (10) according to any one of the preceding claims, comprising an outer case (50), defined in at least two case parts, the case being arranged to at least partially house said adjusting means (20) and, when said at least two case parts are connected to one another, has an outlet orifice (52) for the connecting means (60).

8. The handle (10) according to claim 7, **characterized in that** at least one case part forms an open cavity of a groove (53), said cavity (53) being arranged to receive said connecting means in an adjusted manner (60).

9. A cognitive training device (70) comprising:
- a handle (10) according to any one of the preceding claims;
- a ball (80) comprising a connection means (90);
- a connecting means (60) arranged to connect or connecting the handle (10) to said connection means (90) of said ball (80).

10. The device (70) according to claim 9, **characterized in that** said connection means (90) of the ball (80) comprises:
- an orifice crossing through a ball wall;
- a first connection part (92) placed inside said ball; and
- a second connection part (93) placed outside said ball,
said first connection part (92) having a front face (92a) from which a first male connecting element (94) protrudes, said first male connecting element (94) crossing through said orifice (91) and being fitted in a second female connecting element (93) procured by the second connection part (93) and arranged to be connected to said connecting means (60), said front face (92a) of said first connecting element being in contact with an inner wall part (81) of the ball and a dorsal face (93a) of said second connecting element (93) being arranged to be in contact with an outer wall (82) part of the ball, so as to form a hermetic connection between said ball (80) and said connecting means (60).

11. The device (70) according to claim 9 or 10, **characterized in that** said connecting means (60) is a cable, or chain, or string.
